# EUROPÄISCHE PATENTANMELDUNG

(11) **EP 3 613 289 A1**
(43) Veröffentlichungstag der Anmeldung: **26.02.2020**
(21) Anmeldenummer: 19191894.5
(22) Anmeldetag: 15.08.2019
(51) Int. Cl.: A21B 7/00

(54) **VERFAHREN ZUM HERSTELLEN VON BACKWAREN IN MINDESTENS EINEM BACKOFEN**

(30) Priorität: 23.08.2018 DE 102018120663
(71) Anmelder: Leppig, Joachim, 97421 Schweinfurt (DE)
(72) Erfinder: Leppig, Joachim, 97421 Schweinfurt (DE)
(74) Vertreter: Gosdin, Carstensen & Partner Patentanwälte Partnerschaftgesellschaft mbB

(57) **Zusammenfassung**

Die Erfindung betrifft ein Verfahren zum Herstellen von Backwaren in mindestens einem Backofen (1, 2, 3). Um einen möglichst geringen Energieverbrauch beim Backen zu erreichen, sieht die Erfindung vor, dass das Verfahren die Schritte aufweist: a) Definition herzustellender Backwaren in einem Backplan (4), wobei der Backplan (4) die Art der Backwaren umfasst, die bis zu einem definierten Zeitpunkt verfügbar sein sollen; b) Definition von erforderlichen Ofentemperaturen (T₀) und Backzeiten für die herzustellenden Backwaren; c) automatische Aktivierung des mindestens einen Backofens (1, 2, 3) mittels einer Steuereinrichtung (5) unter Berücksichtigung einer gegebenen Aufheizzeit des mindestens einen Backofens (1, 2, 3), sodass zum Beginn der Backzeit in dem mindestens einen Backofen (1, 2, 3) die erforderliche Ofentemperatur (T₀) vorliegt.

## Beschreibung

Die Erfindung betrifft ein Verfahren zum Herstellen von Backwaren in mindestens einem Backofen.

In vielen Verkaufsgeschäften, in denen frische Backwaren verkauft werden, sind üblicherweise Backöfen vorhanden, mit denen vorbereitetes Backgut gebacken bzw. aufgebacken wird. Vom Personal kann hierzu ein Backplan erstellt werden, der angibt, welche Art von Backwaren im Verkaufsgeschäft in welcher Menge zu einem definierten Zeitpunkt des Tages bereitgehalten werden sollen.

Mitunter werden die Backöfen stets auf einer hinreichenden Temperatur gehalten, um sie jederzeit verfügbar zu haben, wenn mit entsprechendem zeitlichen Vorlauf (d. h. im wesentlichen unter Berücksichtigung der Backzeit) das Backgut in den Ofen gegeben wird.

Nachteilig ist dabei, dass hierfür die Öfen teilweise ohne Notwendigkeit auf hohen Temperatur gehalten werden und somit hohe Energiekosten anfallen.

Der Erfindung liegt die **Aufgabe** zugrunde, ein gattungsgemäßes Verfahren für die Herstellung von Backwaren bereitzustellen, mit dem automatisch der Energiekonsum für das Backen minimiert werden kann. Dabei soll es nicht erforderlich sein, dass sich das Personal um einen optimierten Betrieb kümmert, dies soll vielmehr von einem System automatisiert bewerkstelligt werden.

Die **Lösung** dieser Aufgabe durch die Erfindung ist dadurch gekennzeichnet, dass das Verfahren die Schritte aufweist:
a) Definition herzustellender Backwaren in einem Backplan, wobei der Backplan die Art der Backwaren umfasst, die bis zu einem definierten Zeitpunkt verfügbar sein sollen;
b) Definition von erforderlichen Ofentemperaturen und Backzeiten für die herzustellenden Backwaren;
c) automatische Aktivierung des mindestens einen Backofens mittels einer Steuereinrichtung unter Berücksichtigung einer gegebenen Aufheizzeit des mindestens einen Backofens, sodass zum Beginn der Backzeit in dem mindestens einen Backofen die erforderliche Ofentemperatur vorliegt.

Bei der Aktivierung des mindestens einen Backofens gemäß obigem Schritt c) kann dabei mittels eines Temperatursensors (in jedem Backofen) die Temperatur in dem mindestens einen Backofen erfasst und der Steuereinrichtung übermittelt werden, wobei die Steuereinrichtung unter Berücksichtigung der gegebenen Aufheizzeit des mindestens einen Backofens und der bereits vorliegenden Temperatur den mindestens einen Backofen so aktiviert, dass zum Beginn der Backzeit in dem mindestens einen Backofen die erforderliche Ofentemperatur vorliegt.

Dabei ist besonders bevorzugt vorgesehen, dass die herzustellenden Backwaren in mehr als in einem Backofen gebacken werden, wobei die Steuereinrichtung einen für das Backen zur Verfügung stehenden Backofen unter Berücksichtigung seiner aktuellen Temperatur aufheizt, sodass die für das Aufheizen des Backofens benötigte Energie minimal wird.

Für die Ermittlung der zur Verfügung stehenden Backöfen kann dabei bevorzugt eine zeitliche Toleranz von der Steuereinrichtung berücksichtigt werden, die die Zeit angibt, bis zu der der Backofen zur Verfügung steht. Die (maximale) zeitliche Toleranz beträgt bevorzugt zwischen 5 und 10 Minuten.

Bei der Durchführung des obigen Schritts c) kann auch nur ein Abschnitt des mindestens einen Backofens betrachtet werden, d. h. ein innerer Abschnitt des Ofens, in dem eine Temperaturzone vorliegt.

Die Definition der herzustellenden Backwaren gemäß obigem Schritt a) kann den Kalendertag, Tage, in denen keine Backwaren verkauft werden, und/oder Wetterdaten berücksichtigen. Hiernach berücksichtigt der Backplan also den typischen Bedarf spezieller Backwaren in Abhängigkeit des Kalendertages und gegebenenfalls Effekte, die durch Feiertage hervorgerufen werden, wenn nämlich nach diesen ein systematisch anderer Bedarf an Backwaren besteht. Dasselbe gilt unter Berücksichtigung des Wetters, welches auf das Kaufverhalten von Backwaren Einfluss hat.

Der Backplan kann dabei unterschiedliche Arten von herzustellenden Backwaren umfassen.

Die Steuerungseinrichtung ist dabei ausgebildet, den mindestens einen Backofen einzuschalten, wenn dies für die Realisierung des Backplans erforderlich ist.

Demgemäß stellt das vorgeschlagene Konzept darauf ab, es nach Definition eines Backplans der Steuereinrichtung zu überlassen, stets für das Bereitstehen des oder eines Backofens zu sorgen, der zum erforderlichen Zeitpunkt die benötigte Temperatur aufweist, um in energieoptimierter Weise das benötigte Backgut zu backen.

Die erforderlichen Daten werden bevorzugt elektronisch gespeichert und der Steuereinrichtung somit zur Verfügung gestellt. Neben dem Backplan gilt dies auch für die gegebenen Aufheizgeschwindigkeiten der Backöfen (z. B. in °C pro Minute), sodass die Steuereinrichtung ausgehend von einer gegebenen Ist-Temperatur hieraus berechnen kann, wann der betreffende Ofen eingeschaltet werden muss, um zur richtigen Zeit zur Verfügung zu stehen.

In der Filiale oder an den Öfen kann hierzu ein Signalelement angeordnet sein, welches dem Personal den Zeitpunkt signalisiert, zu dem entsprechendes Backgut in den Ofen eingeschoben werden soll.

Somit lässt sich der Energieverbrauch in der Bäckerei minimieren.

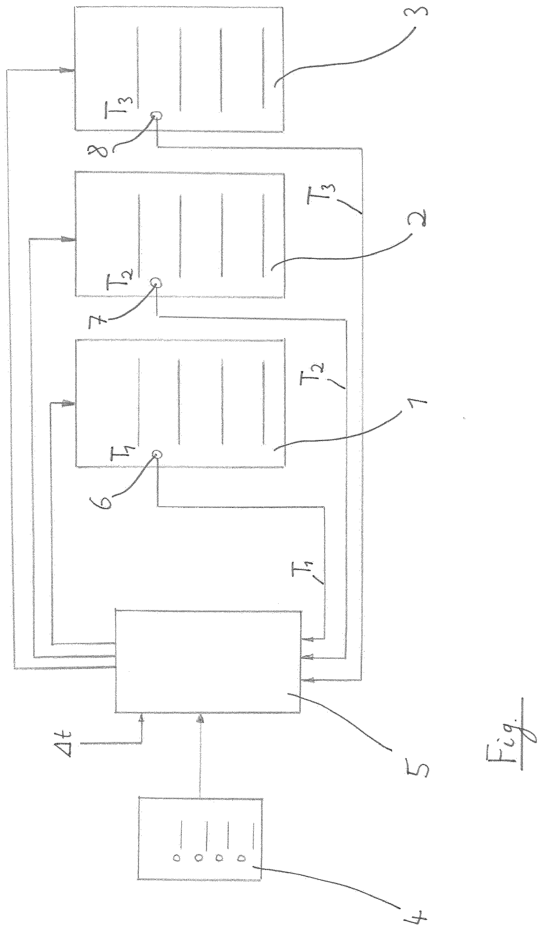

In der Figur ist ein Ausführungsbeispiel der Erfindung dargestellt. Die Figur zeigt einige Elemente einer Bäckerei.

In der Figur ist eine Bäckerei (vorliegend eine Bäckereifiliale oder ein Backshop im Lebensmitteleinzelhandel) angedeutet. Dargestellt sind drei Backöfen 1, 2 und 3, die mit einer Steuereinrichtung 5 in Verbindung stehen. Über die Steuereinrichtung 5 kann ein Backofen 1, 2, 3 zu einem definierten Zeitpunkt eingeschaltet werden.

Der Herstellung des gewünschten Backguts liegt ein Backplan 4 (insbesondere für einen konkreten Backshop bzw. eine konkrete Verkaufsstätte) zugrunde, der bevorzugt als elektronische Liste geführt wird und der angibt, welche Art von Gebäck zu welchem Zeitpunkt und in welcher Menge in der Bäckerei bereitgehalten werden soll.

In den Backplan 4 gehen dabei gegebenenfalls alle relevanten Daten ein, die sich aus dem Kaufverhalten der Kundschaft ergeben. So wird typischerweise die Menge der einzelnen zu backenden Backartikel aufgelistet, die während eines Tages gebacken werden sollen, wobei insbesondere der Zeitpunkt, zu dem die entsprechenden Artikel fertig gebacken sein sollen, vermerkt sind. Dabei können auch der Wochentag und Feiertage (Brückentage) berücksichtigt werden, die auf das Kaufverhalten einen Einfluss haben. Dasselbe gilt für das Wetter, da dieses gleichermaßen das Kaufverhalten beeinflusst. So werden bei hohen Temperaturen andere Backwaren bevorzugt, als es bei niedrigen Temperaturen der Fall ist. Der konkrete Backplan ergibt sich somit unter Berücksichtigung von Erfahrungswerten, in denen sich die obigen Umstände widerspiegeln. Des weiteren kann auch das aktuelle Kaufverhalten der Kunden in den Backplan einfließen. Hiernach können beispielsweise aktuelle getätigte Umsätze für die einzelnen Produkte erfasst und so ein Rückschluss darauf gezogen werden, welche Produkte demnächst bereitgestellt sein müssen; diese werden dann entsprechend in den Backplan aufgenommen.

Jeder Backofen 1, 2, 3 ist mit je einem Temperatursensor 6, 7, 8 versehen, wobei die Sensoren mit der Steuereinrichtung 5 in Verbindung stehen. Demgemäß kann die Steuereinrichtung erfassen, welche Temperaturen T₁, T₂ bzw. T₃ in den drei Backöfen 1, 2, 3 aktuell vorliegen.

Diese Temperaturen T₁, T₂ bzw. T₃ werden im Laufe des Tages von erforderlichen Ofentemperaturen T₀ abweichen, die für das Backen der verschiedenen Backartikel erforderlich sind.

Aufgrund des gegebenen Backplans 4 weiß die Steuereinrichtung 5 auch, welcher Ofen 1, 2, 3 aktuell im Betrieb ist und welcher für einen Backvorgang zur Verfügung steht (gegebenenfalls unter Berücksichtigung einer zeitlichen Toleranz, s. unten).

Demgemäß prüft die Steuereinrichtung 5 aufgrund eines gespeicherten Algorithmus, welcher Backofen 1, 2, 3 aufgrund seiner aktuellen Temperatur T₁, T₂ bzw. T₃ am besten für die Durchführung des nächsten anstehenden Backauftrags geeignet ist, um mit möglichst wenig Energie den entsprechenden Ofen vorzuheizen, sodass er zum entsprechenden Zeitpunkt für den Backauftrag zur Verfügung steht.

Dabei kann eine (maximale) zeitliche Toleranz Δt berücksichtigt werden, die beispielsweise zwischen 5 und 10 Minuten betragen kann. Diese zeitliche Toleranz wird der Steuereinrichtung 5 vorgegeben, sodass diese prüfen kann, ob es unter energetischen Gesichtspunkten lohnenswert ist, die Zeit abzuwarten, bis ein sich noch im Betrieb befindlicher Ofen frei ist, sodass dieser für den nächsten Backvorgang vorgesehen werden kann.

Insgesamt ergibt sich damit ein automatischer Betrieb der einzelnen Backöfen 1, 2, 3 unter Zugrundelegung eines vorgegebenen Backplans 4, bei dem der Energiekonsum minimiert ist.

### Bezugszeichenliste:

- 1: Backofen
- 2: Backofen
- 3: Backofen
- 4: Backplan
- 5: Steuereinrichtung
- 6: Temperatursensor
- 7: Temperatursensor
- 8: Temperatursensor

- T₀: erforderliche Ofentemperatur
- T₁: Temperatur Backofen 1
- T₂: Temperatur Backofen 2
- T₃: Temperatur Backofen 3

- Δt: zeitliche Toleranz

## Patentansprüche

1. Verfahren zum Herstellen von Backwaren in mindestens einem Backofen (1, 2, 3),
**dadurch gekennzeichnet, dass**
es die Schritte aufweist:
a) Definition herzustellender Backwaren in einem Backplan (4), wobei der Backplan (4) die Art der Backwaren umfasst, die bis zu einem definierten Zeitpunkt verfügbar sein sollen;
b) Definition von erforderlichen Ofentemperaturen (T₀) und Backzeiten für die herzustellenden Backwaren;
c) automatische Aktivierung des mindestens einen Backofens (1, 2, 3) mittels einer Steuereinrichtung (5) unter Berücksichtigung einer gegebenen Aufheizzeit des mindestens einen Backofens (1, 2, 3), sodass zum Beginn der Backzeit in dem mindestens einen Backofen (1, 2, 3) die erforderliche Ofentemperatur (T₀) vorliegt.

2. Verfahren nach Anspruch 1, **dadurch gekennzeichnet, dass** bei der Aktivierung des mindestens einen Backofens (1, 2, 3) gemäß Schritt c) von Anspruch 1 mittels eines Temperatursensors (6, 7, 8) die Temperatur (T₁, T₂, T₃) in dem mindestens einen Backofen (1, 2, 3) erfasst und der Steuereinrichtung (5) übermittelt wird, wobei die Steuereinrichtung (5) unter Berücksichtigung der gegebenen Aufheizzeit des mindestens einen Backofens (1, 2, 3) und der bereits vorliegenden Temperatur (T₁, T₂, T₃) den mindestens einen Backofen (1, 2, 3) so aktiviert, dass zum Beginn der Backzeit in dem mindestens einen Backofen (1, 2, 3) die erforderliche Ofentemperatur (T₀) vorliegt.

3. Verfahren nach Anspruch 2, **dadurch gekennzeichnet, dass** die herzustellenden Backwaren in mehr als in einem Backofen (1, 2, 3) gebacken werden, wobei die Steuereinrichtung (5) einen für das Backen zur Verfügung stehenden Backofen (1, 2, 3) unter Berücksichtigung seiner aktuellen Temperatur (T₁, T₂, T₃) aufheizt, sodass die für das Aufheizen des Backofens (1, 2, 3) benötigte Energie minimal wird.

4. Verfahren nach Anspruch 3, **dadurch gekennzeichnet, dass** für die Ermittlung der zur Verfügung stehenden Backöfen (1, 2, 3) eine zeitliche Toleranz (Δt) von der Steuereinrichtung (5) berücksichtigt wird, die die Zeit angibt, bis zu der der Backofen (1, 2, 3) zur Verfügung steht.

5. Verfahren nach Anspruch 4, **dadurch gekennzeichnet, dass** die zeitliche Toleranz (Δt) zwischen 5 und 10 Minuten beträgt.

6. Verfahren nach einen der Ansprüche 1 bis 5, **dadurch gekennzeichnet, dass** bei der Durchführung des Schritts c) gemäß Anspruch 1 ein Abschnitt des mindestens einen Backofens (1, 2, 3) betrachtet wird.

7. Verfahren nach einen der Ansprüche 1 bis 6, **dadurch gekennzeichnet, dass** die Definition der herzustellenden Backwaren gemäß Schritt a) von Anspruch 1 den Kalendertag berücksichtigt.

8. Verfahren nach einen der Ansprüche 1 bis 7, **dadurch gekennzeichnet, dass** die Definition der herzustellenden Backwaren gemäß Schritt a) von Anspruch 1 Tage berücksichtigt, in denen keine Backwaren verkauft werden.

9. Verfahren nach einen der Ansprüche 1 bis 8, **dadurch gekennzeichnet, dass** die Definition der herzustellenden Backwaren gemäß Schritt a) von Anspruch 1 Wetterdaten berücksichtigt.

10. Verfahren nach einen der Ansprüche 1 bis 9, **dadurch gekennzeichnet, dass** der Backplan (4) unterschiedliche Arten von herzustellenden Backwaren umfasst.
